# EUROPEAN PATENT SPECIFICATION

(11) **EP 4 558 299 B1**
(45) Date of publication and mention of the grant of the patent: **28.10.2026**
(21) Application number: 23724352.2
(22) Date of filing: 26.04.2023
(51) Int. Cl.: B23K 9/32, C23C 24/10, B23K 9/04, B23K 9/29, B23K 101/00, B23K 101/34

(54) **HARD SURFACING OF METALLIC WEAR COMPONENT**
HARTBESCHICHTUNG VON METALLISCHEN VERSCHLEISSTEILEN
TRAITEMENT DE SURFACE DUR D'UN COMPOSANT MÉTALLIQUE D'USURE

(30) Priority: 22.07.2022 GB 202210779
(43) Date of publication of application: 28.05.2025
(73) Proprietor: Wear Resistance Limited, Sheffield South Yorkshire S4 8LJ (GB)
(72) Inventor: JOWLE, Jonathan William Mark, Sheffield South Yorkshire S4 8LJ (GB)
(74) Representative: Franks & Co Limited
(86) International application number: PCT/GB2023/051104
(87) International publication number: WO 2024/018167

(56) References cited:
- EP-B1- 0 726 117
- US-A1- 2012 325 779
- US-A1- 2014 054 027

## Description

### Field of the Invention

The present invention relates to improvements in the hardening of the surface of metallic wear components and parts. More particularly, the present invention relates to an improved method and apparatus for depositing a hard wearing overlay onto a metallic product that is subjected to wear in use.

### Background of the Invention

Metallic components in heavy duty processes such as earth moving tools, large scale turbines, steel production and industrial machinery generally, are typically subjected to intensive mechanical and abrasive forces in use, often resulting in premature wear. Such components, frequently of a substantial size, are typically made from mild steel, a material achieving a compromise between cost and structural integrity, at the expense of durability. Techniques are known to reinforce discrete portions of such components, with the application of a hard metal overlay which includes hard metal particles, for instance tungsten carbide particles, onto one or more surfaces of the component which withstand the strongest abrasions, impacts and other stress forces.

Known techniques for applying hard metal overlays include open arc hard surfacing, wherein a matrix overlay is applied to a component surface using a tubular wire electrode filled with hard metal and flux; submerged arc hard surfacing, wherein the matrix overlay is applied to a component surface using a tubular wire electrode filled with hard metal and the overlay is deposited under a thick layer of powdered flux, which is continuously fed from a hopper; bulk welding hard surfacing, wherein the hard metal overlay is applied to a component surface using a solid wire electrode, a gas shield and an external powder feed of hard metal, continuously fed into the arc from a hopper; and gas shielded arc hard surfacing, wherein the matrix overlay is applied to a component surface using a tubular wire electrode filled with hard metal, and a gas shield. In all of these four processes, most of the hard metal is melted in the electric arc and reforms as a crystalline structure during solidification.

Advantages of these prior art processes include high deposition rates, corresponding to a relatively low cost of processing, and a suitability for high volumes of wear resistant components used in applications wherein accessibility for replacement is good and the consequences of premature failure are not severe. Disadvantages are however numerous. For example, in each of these mentioned prior art techniques, the content of hard metal carbide contained in the overlay is relatively low, typically 20 to 35%. Moreover, multi-head welding machines may be used by each of these prior art techniques, operating at very high power levels. Consequently, penetration into the component surface material is substantial, typically 2 to 3 millimetres deep, which results in significant dilution of the hard metal in the overlay by the component material, whereby full hardness may only be achieved with a second or third layer atop the first layer contacting the component surface.

Moreover, in all of these prior art techniques, prominent check-cracking of the deposit occurs shortly after solidification and deposits tend to be brittle whereby they lack toughness and impact resistance. Further, the metal microstructure of the component surface closest to the welded layer can be heat affected and modified, resulting in embrittlement of the component itself, whereby cracks within the component, or between the component and the exterior hardfacing layer, can occur and then propagate under load.

Importantly, as a consequence of the heat generated in all four prior art techniques, shrinkage of the processed component surface is very significant, and is not predictable. This disadvantage is particularly relevant to applications wherein the wear component or part cannot itself be hard surfaced, and for which wear plates are used instead, which are overlaid with the above techniques and then fixed to the wear component or part, typically with threaded fasteners.

Fixing methods for hard surfaced wear plates typically include welded-on studs, welded-in countersunk inserts and plasma-cut countersunk holes. Welded-on studs can be accurately positioned on a hard surfaced wear plate, but there is a risk of detachment in service, as they rely on the integrity of attachment welds, which are in tension. These are not considered sufficiently reliable for dynamic assemblies of components and wear plates. Welded-in countersunk inserts are also prone to detachment, particularly if the attachment weld is contaminated with hard metal from the edge of the hole into which it is welded. This technique also leaves the bolt head exposed, leading to preferential wear. The bolt head can then be hard surfaced, but this still results in preferential wear over the bolt head, because it has not been hard surfaced at the same time as the rest of the plate, and because it is manually welded by a different process. The hard surfacing of the bolt head also subjects the bolt to very high, concentrated heat from the weld pool, thus affecting the material properties and the integrity of the bolt. Plasma- or laser-cut countersunk holes can be cut into the hard surfaced wear plate, whereby a countersunk bolt can then be fitted into the plate, and hard surfaced over, although this results in premature wear and affects the bolt in the same way as when using welded-in countersunk inserts above. The countersunk holes are also likely to be of poor quality, as they are not machined, but made by a thermal cutting process: this technique results in an insecure seating for the bolt head, stressing the bolt unevenly, which is likely to lose tension in service. Welded-in countersunk inserts and the combination of plasma cut countersunk holes with countersunk bolts are sometimes described as "integral bolts", but they are inferior in quality, durability and security, for the reasons stated above.

Accordingly, there is a requirement to provide a more durable overlay and an improved interface between the overlay and the underlying surface of the wear component.

The prior art document United States of America patent application no. US2012325779A1 disclosed a hardfacing machine used for depositing a hardfacing alloy onto a metallic workpiece. It further disclosed a welding unit including a wire feed system to supply wire to a welding head; a powder alloy feeding system including a powder feed nozzle fluidly connected to an alloy powder supply. The welding head and powder feed nozzle moved in a travel direction relative to the workpiece. The powder feed nozzle was positioned and oriented to feed a powder stream of alloy powder into a molten pool generated on the workpiece by an electrical arc produced by the welding head at a low temperature location behind the welding head relative to the travel direction. This alloy surfacing strategy limited vaporization of alloy elements by avoiding the high temperature region associated with the electrical arc.

### Summary of the Invention

The present invention provides an improved method, and a system embodying the improved method, for overlaying a component or wear plate with a hard metal composition, with an electric arc technique applied by a single head, purpose built, welding machine powered at a lower power level relative to known processes described hereinabove.

According to an aspect of the present invention, there is therefore provided a system for overlaying a metallic component with a hard metal composition, comprising an arc welding device for generating a weld pool onto a surface portion of the metallic component, having a direction of travel relative to the metallic component in use; a consumable electrode made of a metallic material or composition, molten by the arc welding device into the weld pool in use; a first nozzle adjacent the arc welding device, adapted to feed at least a first hard metal material in particulate form into the electric arc upstream of the direction of travel of the arc welding device; a second nozzle adjacent the arc welding device, adapted to feed at least the first hard metal material or another in particulate form into the weld pool downstream of the direction of travel of the arc welding device; and means to displace either the arc welding device, the consumable electrode and the first and second nozzles relative to the metallic component, or to displace the metallic component relative to the arc welding device, the consumable electrode and the first and second nozzles, according to the direction of travel.

The directional element in the system of the invention, feeding a hard metal material into the electric arc at its hottest temperature greatly increases the capacity of the weld pool to accept material added by the downstream feed, effectively enabling the downstream feed to be incorporated at a much greater percentage volume than is possible with single or multiple feed techniques without a leading element or aspect: the addition of cold hard metal cools the weld pool rapidly, accordingly reducing the amount of heat imparted to the underlying component and thus reducing shrinkage. This technique achieves full hardness and wear resistance properties in the first layer, with finer and much less prominent instances of check-cracking and minimised penetration into the component surface material, of typically 0.25 mm to 1.5 mm, and less brittle deposits, moreover wherein shrinkage of the component is much reduced and is predictable relative to the prior art. In some embodiments, the first layer contains substantially 48% chromium carbide or 53% tungsten carbide.

In an embodiment of the system of the invention, the arc welding device, consumable electrode and the first and second nozzles may be mounted to a support structure adapted to oscillate orthogonally relative to the direction of travel of the arc welding device as the system layers the component, thus defining a constant and preferably adjustable width of the weld pool.

The system of the invention is advantageously suitable for overlaying the surface portion of a component multiple times whereby, in an embodiment of the system, the surface portion of the metallic component comprises at least a first layer of the hard metal composition comprising the one or more first hard metal material, thus wherein the arc welding device is also for generating a weld pool onto the at least first layer atop the surface portion of the metallic component.

Any hard metal material in granular, powdered or particulate form may be suitable for use with the apparatus, subject to the material properties thereof and their compatibility with the consumable rod material, the component surface and the intended application. In particular, the or each hard metal material in particulate form may be selected from the group comprising chromium, tungsten, carbon, iron, titanium, molybdenum, vanadium, niobium, manganese, silicon, nickel, and alloys and compounds thereof. In preferred variants of this embodiment, the first hard metal material fed by the first nozzle is ferrochromium and another hard metal material fed by the second nozzle is tungsten carbide, ferrochromium or chromium carbide. The deposit according to this embodiment contains a very high proportion of tungsten carbide or ferrochromium or chromium carbide grit, most of which remains in its original form, and is fully fused into the chromium carbide deposit matrix, wherein the maximised content of tungsten carbide, ferrochromium or chromium carbide in the overlay is evenly distributed throughout the full thickness of the deposit, to the contrary of prior art techniques wherein the heavy tungsten carbide in particular, but also the ferrochromium or chromium carbide to a lesser extent, combined with high power levels and therefore a large, fluid weld pool, causes much of the relatively low content of tungsten carbide material, ferrochromium or chromium carbide to sink to the base of the deposit.

In an embodiment of the system, the arc welding device is a gas metal arc welding device. The gas shield effectively excludes oxygen from the vicinity of the weld pool, thus enabling complete fusion between the component, the overlay and the overlay constituents. An embodiment of the system may further comprise a wire feed unit for dispensing the consumable electrode in use. In an embodiment of the system, the consumable electrode is preferably made from carbon steel, stainless steel or nickel.

In an embodiment of the system, each nozzle is in communication with at least one hopper storing the at least first hard metal material in particulate form. In an alternative embodiment of the system, each nozzle may be in communication with a respective hopper, each hopper storing the same first or a different respective hard metal material in particulate form. In a variant of either embodiment of the system, the or each hopper may be interfaced with the nozzle through a metering device.

According to another aspect of the present invention, there is also provided a method of overlaying a metallic component with a hard metal composition, comprising the steps of melting a consumable electrode made of a metallic material or composition into a weld pool onto a surface portion of the metallic component with an arc welding device having a direction of travel relative to the metallic component in use; feeding at least a first hard metal material in particulate form with feeding means, for instance a metering device, into the electric arc upstream of the direction of travel of the arc welding device; feeding at least the first hard metal material or another in particulate form with feeding means into the weld pool downstream of the direction of travel of the arc welding device; and moving the arc welding device and the feeding means relative to the metallic component according to the direction of travel; or moving the metallic component relative to the arc welding device and the feeding means according to the direction of travel.

An embodiment of the method may comprise the further steps of melting the consumable electrode and feeding the one or more hard metal material upstream and downstream of the direction of travel of the arc welding device, onto a layer of hard metal composition atop the surface portion of the metallic component.

In an embodiment of the method, the step of melting preferably comprises heating the consumable electrode within the range 1490 to 1550 degrees Celsius.

In an embodiment of the method, the step of feeding the or each hard metal material further comprises metering the or each hard metal material according to a rate of displacement of the arc welding device, the feeding means and the component relative to each other. In a variant of this embodiment, the step of metering the first hard metal material at the first nozzle further comprises generating a feed rate of the first hard metal material according to the capacity of the weld pool. In a variant of either embodiment, the step of metering the first or second hard metal material at the second nozzle further comprises generating a feed rate of the first or second hard metal material according to the volume and/or capacity of the weld pool.

For any of the above embodiments of the method, the or each hard metal material in particulate form is selected from the group comprising chromium, tungsten, carbon, iron, titanium, molybdenum, vanadium, niobium, manganese, silicon, nickel, and alloys and compounds thereof. In a preferred variant, the first hard metal material is preferably ferrochromium, the second hard metal material is preferably tungsten carbide, the feed rate of ferrochromium is substantially 55 grams per minute, the feed rate of tungsten carbide is substantially 180 grams per minute, and the feed rate of the consumable electrode is substantially 78 grams per minute.

According to a further preferred embodiment of the present invention, the method of overlaying a metallic component with a hard metal composition is such that the component comprises integral fastening means, such as bolts and the method comprises the steps of machining at least one countersunk through hole in the metallic component and fitting a countersunk bolt in the countersunk hole.

In this way the method of the invention is thus preferably applied to wear plates, since the relatively small shrinkage rates associated with the overlays of the first method, and the predictability of the shrinkage which does occur, facilitate the production of bolted wear plates which fit the holes in the component or structure without difficulty, wherein the fasteners are secure, robust, and simple to use with normal tools.

Preferably the step of machining may comprise machining a plurality of countersunk through holes and the step of fitting comprises fitting fewer bolts than there are machined countersunk holes.

Preferably the step of fitting the or each countersunk bolt may comprise the further steps of chamfering the bolt head, welding the bolt into the hole and grinding any excess weld metal flush with the surface portion.

Preferably the or each bolt is made from carbon steel or stainless steel.

Suitably, the features of the present invention as are recited in appended claim 1, may be provided as a kit of parts for a welding system.

Preferably such a kit of parts comprising the features of appended claim 1 may further comprise a wire feed unit for dispensing the consumable electrode in use, at least one hopper for storing the at least first hard metal material in particulate form, and at least one dosing device for interfacing the or each hopper with the first and second nozzles.

Other aspects are as set out in the claims herein.

### Brief Description of the Drawings

For a better understanding of the invention and to show how the same may be carried into effect, there will now be described by way of example only, specific embodiments, methods and processes according to the present invention with reference to the accompanying drawings in which:
Figure 1A shows a first embodiment of a system for overlaying a metallic component with a hard metal composition according to the invention.
Figure 1B shows a second embodiment of a system for overlaying a metallic component with a hard metal composition according to the invention.
Figure 1C shows a third embodiment of a system for overlaying a metallic component with a hard metal composition according to the invention.
Figure 1D shows a fourth embodiment of a system for overlaying a metallic component with a hard metal composition according to the invention.
Figure 2 illustrates the arc welding device of any of Figures 1A-1D generating a weld pool onto a surface portion of a metallic component according to a direction of travel, with a first nozzle adjacent and to the front of the arc welding device relative to the direction of travel and a second nozzle adjacent the arc welding device and to the rear thereof according to the direction of travel, in use.
Figure 3 represents an embodiment of the method of overlaying a metallic component with a hard metal composition with the system of any of Figures 1A-1D, as discrete logical steps.
Figure 4 shows the second embodiment of figure 1B in use, overlaying a surface portion of a metallic component according to a first overlaying course.
Figure 5 shows the system of figure 4 overlaying a surface portion of the metallic component according to a second overlaying course.
Figure 6A shows the component of Figure 4 or 5 with a single layer of hard metal composition.
Figure 6B shows the component of Figure 4 or 5 with a second layer of hard metal composition atop the first layer.
Figure 7 represents an embodiment of an alternative method of overlaying a metallic component with a hard metal composition, with the system of any of Figures 1A-1D, as discrete logical steps.
Figure 8 shows two example components with a layer of hard metal composition deposited according to the method shown in Figure 7, wherein each component is a wear plate including fastening means.
Figure 9 shows the same example components of Figure8, in an alternative configuration permitted by the processing temperatures inherent to the methods shown in Figure 3 and 7.

### Detailed Description of the Embodiments

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

The words "comprises/comprising" and the words "having/including" when used herein with reference to the present invention are used to specify the presence of stated features, integers, steps or components but does not preclude the presence or addition of one or more other features, integers, steps, components or groups thereof.

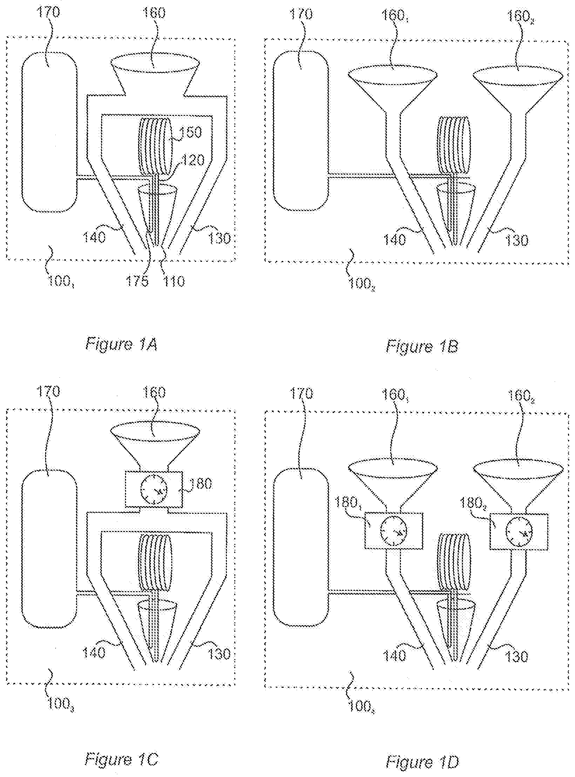

Referring now to the Figures and initially Figure 1A, there is shown a first embodiment of a system 100₁ for overlaying a metallic component with a hard metal composition, comprising an arc welding device 110, a consumable electrode 120 made of a metallic material or composition, a first nozzle 130 adjacent the arc welding device 110 and in front thereof according to a direction of travel 190 of the system in use, and a second nozzle 140 adjacent the arc welding device 110 and to the rear thereof according to the direction of travel 190 of the system 100₁ in use. The arc welding device 110 is a gas metal arc welding device and, in a preferred embodiment, a metal inert gas (MIG) welding device. The consumable electrode 120 is dispensed by a wire feed unit 150. In this first embodiment each of the first and second nozzles 130, 140 is fed by gravity from a common hopper 160 located above the welding device 110 and the nozzles 130, 140. The shielding gas required by the MIG device 110 is supplied from a gas source 170 through a gas nozzle 175. Both a height of the welding device relative to an underlying component, and a distance from each of the leading nozzle 130 and the trailing nozzle 140 relative to the weld point, is preferably in the range 15 to 30 millimetres.

Referring now to Figure 1B, wherein like reference numerals correspond to like features, there is shown a second embodiment of a system 100₂ for overlaying a metallic component with a hard metal composition, comprising again the arc welding device 110, the consumable electrode 120 made of a metallic material or composition, the first nozzle 130 adjacent the arc welding device 110 and in front thereof according to a direction of travel of the system in use, and the second nozzle 140 adjacent the arc welding device 110 and to the rear thereof according to a direction of travel of system 100 in use. In this second embodiment, each of the first and second nozzles 130, 140 is fed by gravity from a respective hopper 160_{1,2}, wherein both hoppers are located above the welding device 110 and the nozzles 130, 140.

Referring now to Figure 1C, wherein like reference numerals still correspond to like features, there is shown a third embodiment of a system 100₃ for overlaying a metallic component with a hard metal composition, corresponding generally to the first embodiment 100₁ shown in Figure 1A, however in this embodiment further comprising a metering device 180 interfacing the common hopper 160 with the conduit to the front and rear nozzles 130, 140 for dosing the hard material feed rate to the nozzles rather than by gravity.

Referring next to Figure 1D, wherein like reference numerals still correspond to like features, there is shown a fourth embodiment of a system 100₄ for overlaying a metallic component with a hard metal composition, corresponding generally to the second embodiment 100₂ shown in Figure 1B, however further comprising two metering devices 180_{1,2}, each interfacing a respective hopper 160_{1,2} with its conduit to its associated nozzle 130, 140 for dosing the hard material feed rate to the nozzle rather than by gravity, and each independently of the other.

For any of the above embodiments, the angle of the welding head 110 should preferably lie in the range 83 to 90 degrees, the angle of the leading nozzle 130 in the range 40 to 50 degrees from the horizontal and the angle of the trailing nozzle 130 in the range 50 to 70 degrees from the horizontal.

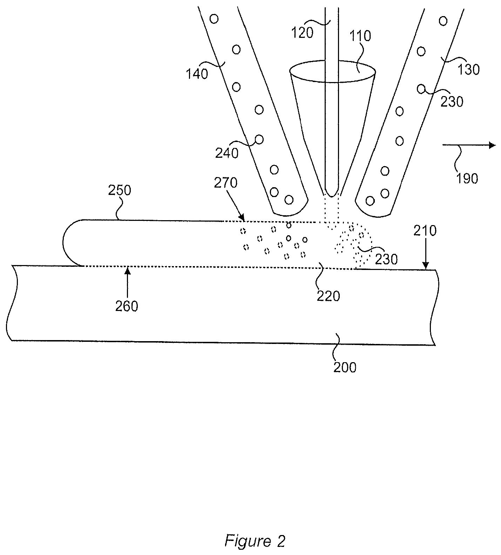

The hard metal material in granular, powdered or particulate form fed from the one or more hoppers 160_{1,2} to the nozzles 130, 140 is selected from the group comprising chromium, tungsten, carbon, and alloys and compounds thereof. For most applications trialled by the inventors, the hard material fed by the first nozzle 130 in front of the welding head 110 is ferrochromium, and tungsten carbide or ferrochromium or chromium carbide is fed as another hard metal material by the second nozzle 140 to the rear of the welding head 110. With reference to Figure 2, a close-up view of a component 200 is shown, a surface 210 of which is being layered by any of the embodiments 100₁₋₄ according to the invention in use. The combination of single welding head 110 and front and rear nozzles 130, 140 is depicted in motion relative to the component 200 and the surface thereof being layered 210 according to a direction of travel 190, wherein the arc welding device 110 generates a weld pool 220 immediately underneath the welding head 110 by melting the consumable rod 120.

The first hard metal material 230, in the example ferrochromium, is fed by the front nozzle 130 into the weld pool 220, wherein ferrochromium particles are melted within the weld pool 220 and form a ferrochromium matrix layer 250. The relatively low temperature of the weld pool and the maximised input of granular hard material minimises penetration of the matrix layer 250 into the base material 200 through the surface 210, wherein penetration into the surface portion 210 is in the range 0.25mm to 1.5mm, and depicted in the Figure by a dashed line 260.

The second hard material in granular, powdered or particulate form 240, either tungsten carbide, ferrochromium, or chromium carbide in the example, is deposited by the second nozzle 140 downstream of the welding head 110, into the cooling weld pool 220, depicted by a top dashed line 270 in the figure. Accordingly, the second hard metal particles 240 are not subjected to as high a temperature as the first hard material particles 230, and get dispersed substantially homogenously throughout the matrix 220, wherein the first and second hard metal material particles 240 are represented as full (as continuous line) and then gradually fused (as dashed lines of increasing interval) particles in the cooling sections of the layer 250 downstream of the travel path of the system 100₁₋₄ eventually resulting in an overlay 250 consisting of a homogenous matrix, which is filled with hard metal particles, in the cold section downstream of the travel path.

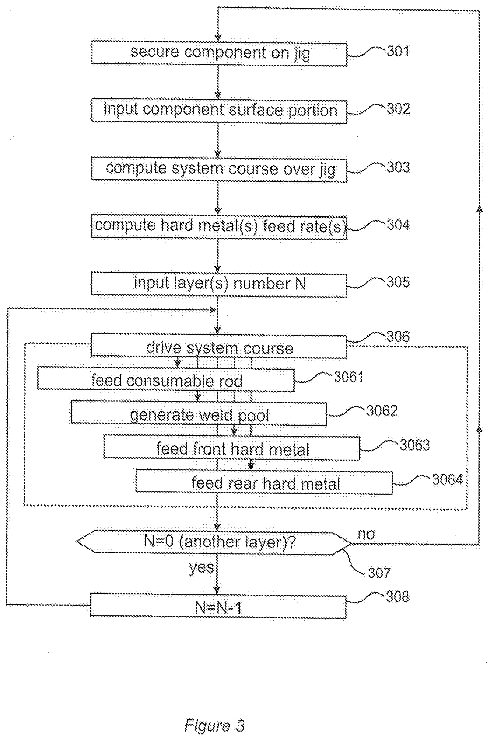

The methodology followed to overlay a metallic component 200 with one or more layers of the hard material composition 250 is now described with reference to Figure 3. A metallic component, typically made from steel, is initially secured on a jig underneath the system 100₁₋₄ at a first step 301. At a next step 302, the surface portion of the component to be layered with the hard material matrix 250 is defined and input into a motion controller driving the combination of arc welding device 110 and its associated front and rear nozzles 130, 140.

It will be readily understood by the skilled person that embodiments of the invention are equally capable of implementation with the system 100₁₋₄ moving relative to the component 200 secured on a fixed jig or, reciprocally, with the jig with the component 200 secured thereon moving relative to a fixed system 100₁₋₄.

At a next step 303, a course is programmed for the system 100 relative to the component 200 secured on the jig, so that the welding head 110 may travel over the entirety of the surface portion 210 of the component 200 to be layered. It will be noted that the surface portion 210 may correspond to the entirety of the surface of a component 200, or to one or more discrete portions thereof, depending on which surface portion(s) of the component 200 require hard surfacing according to its eventual application.

At step 304, a feed rate is computed for the one or more hard metal materials according to several factors, including notably the temperature of the weld pool, the fusion point of each hard metal material respectively fed by the first and second nozzles 130, 140, the melting point of the consumable electrode 120, the displacement speed of the welding device relative to the component, the cooling rate of the matrix, the required thickness of the deposit 250 and the size and shape of the component 200.

For the particulate hard materials noted as example herein, experimentation has indicated fee rate ranges of 60 to 130 gr/min for the leading powder feed 130, for a grain size - 20 + 60 BS mesh, and 90 to 260 gr/min for the tailing powder feed 140 for a grain size in the range - 20 + 60 BS mesh to - 14 + 40 BS mesh. Experimentation has indicated a consumption rate for the electrode 120 of 85to 140 gr./min, under 414 to 526 Amps. Experimentation has indicated a travel speed in the range 300 to 450mm / min.

Applications and contexts are known, for which a component may require a plurality (1-N) of layers 250 atop the surface portion 210 of the component 200, with each additional layer overlaying an underlying layer. Accordingly, at step 305 a number N of layers is input, corresponding to the number of hard metal composition layer(s) 250 required for hard facing the component 200

At step 306, the controller programmed according to steps 302 to 305 drives the system 100₁₋₄ relative to the component 200, or reciprocally depending upon the embodiment, wherein the wire feed unit 150 feeds the consumable rod 120 at step 3061, the welding head 110 melts the consumable rod 120 into the weld pool 220 at step 3062 and, as the system follows the programmed course along the direction of travel 190, the front nozzle 130 feeds the first hard metal particulate material 240 at step 3063 and the rear nozzle 140 feeds the same or another hard metal particulate material 240 at step 3064.

Upon completing the course computed at step 303, the controller interrupts the driving of the system 100₁₋₄ and a question is asked at a next step 307, about whether the layer counter N has a null value. The question effectively corresponds to a check about whether there remains a further layer 220 to weld onto the layered component 200, 250. If the layer counter N does not have a null value, then the value of the counter is decremented at step 308, and control returns to step 306 wherein the controller drives the system 100₁₋₄ over the same course as previously programmed at step 303, thereby eventually resulting in overlaying the layer component with a further layer 250₂ atop the previously-deposited layer 250₁. In the alternative, the question of step 307 is answered positively, signifying that the overlaying of the component 200 secured on the jig at step 301 is complete, such that the method may be repeated onto a next component whereby control returns to step 301.

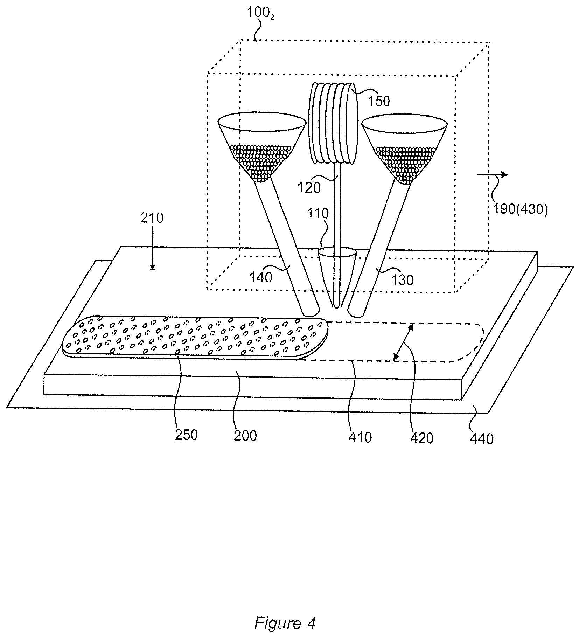

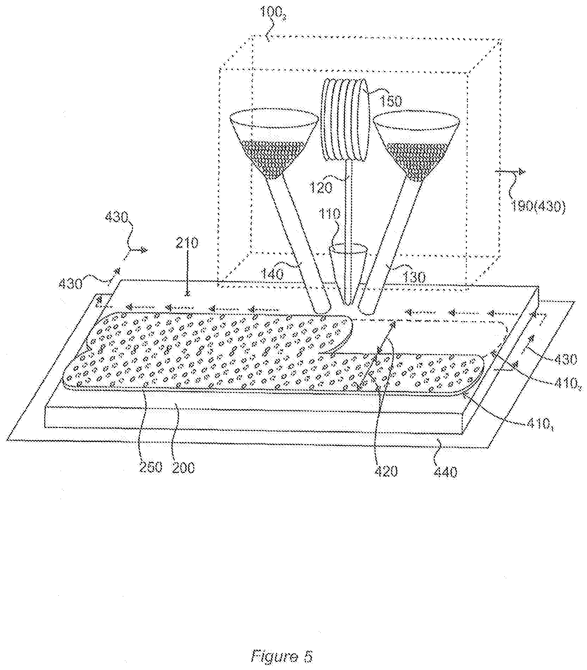

Figures 4 and 5 jointly provide an illustration of the second embodiment of the system 100₂ of Figure 1B in use, overlaying successive surface portions 410_{1,2} according to the steps 301 to 307. Each surface portion 410_{1,2} has a width 420 corresponding to the effective overlaying width of the welding head 110 in use.

Embodiments of the system may include transverse oscillating means adapted to oscillate the welding head 110 orthogonally to the direction of travel 190, particularly when a variable width of deposit is desirable, either on a same or distinct surface portion(s) 210 of a component 200, or between respective surface portions 210 of distinct components 200_{N} having respective uses and wear resistance requirements, wherein both the oscillating width and speed may be varied independently of each other for optimum results.

The system 100₂ layers each surface portion 410_{1,2} according to a course 430 programmed at step 303 and processed at step 306, wherein the motion of the system 100₂ relative to the component 200 secured to the jig 440 according to the course 430 is represented by arrows 440 in the Figure.

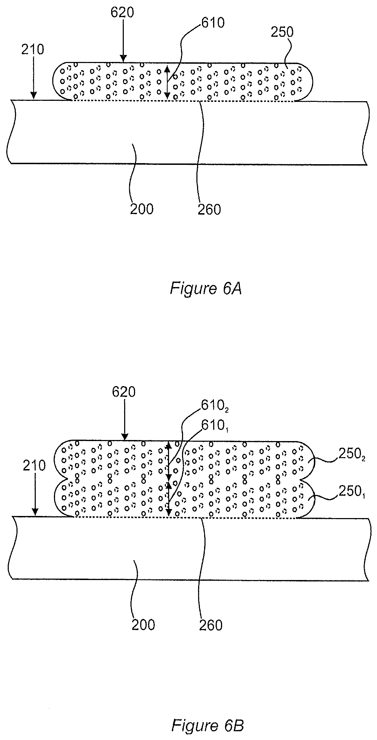

The surface hardening requirements for the component 200 according to its intended application and use, may require the course 430 programmed at step 306 to comprise only a single layer 250 of hard metal composition, which is illustrated in section in Figure 6A as having a height 610 extending between the underlying surface portion 210 of the component that is minimally penetrated by the composition, and the substantially planar surface portion 620 of the deposited layer 250.

However, depending on the wear properties sought for the component 200, the course 430 programmed at step 306 may comprise one or more further layers 250_{1+N} of hard metal composition, which is illustrated in section in Figure 6B. In this example, a second layer of hard metal composition 250₂ is shown, having substantially the same height 610 extending between the underlying substantially planar surface portion 620 of the component's initial layer 250₁ and the substantially planar surface portion 620 of the second-deposited layer 250₂, wherein the underlying surface portion 610 of the component's initial layer 250₁ is again minimally penetrated by the composition, adverting to the low temperature of the weld pool.

Specific details of the course programming and actuation have not been provided for the purpose of not obscuring the description unnecessarily, as same are considered readily understandable and implementable by the reader skilled in industrial automation. Likewise, it will be easily understood by the skilled reader that the above principles are capable of implementation with a jig 440 that is mobile relative to the system 100₂ or, inversely, with a system 100₂ that is mobile relative to the a jig 440, and including independent motion of each of the system 100₂ and the jig 440 one relative to the other.

The relatively low temperature of the weld pool inherent to the operational parameters of the method of hard surfacing a component 200 with one or more layers 250_{N} of hard metal composition, provides opportunities for both increasing the number of component types apt to undergo hard surfacing, and revising the configuration of known components to improve their operational longevity. A field of application particularly advantaged by the present invention is that of complex or semi-complex modular components with removable wear plates secured by fasteners that are subjected, in use, to non-trivial pressure levels of gas or liquid and, typically, in erosive environments, for instance wear plates for turbine blades and vanes.

For such removable components, the fitting configuration of which typically requires that fasteners be engaged in apertures therein prior to hard surfacing, elevated temperature ranges of prior art methods and systems are known to alter the geometry of apertures, the attitude of fasteners therein, and the structural integrity of fasteners. The relatively low temperature of the weld pool of the hard surfacing method disclosed herein, permitted in by the opposite configuration of the dual particle feeds 130, 140, and advantageously avoids these undesirable effects.

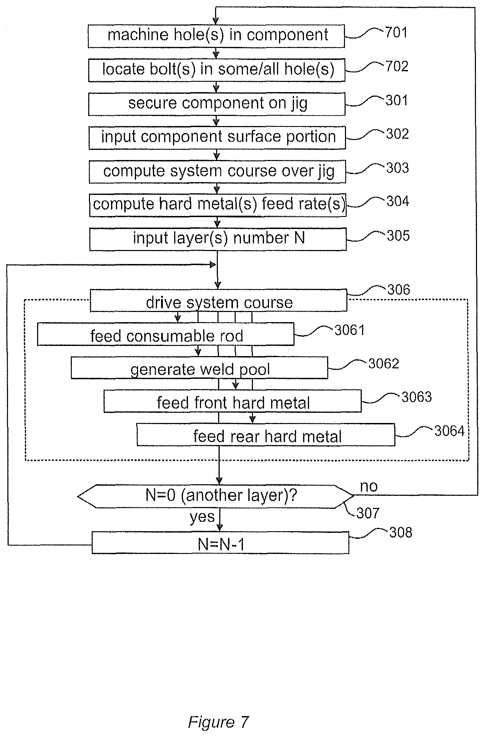

Accordingly, and with reference to Figure 7 now, a method is provided for overlaying metallic components which comprise integral fastening means, such as bolts engaged in partial or through-apertures therein, with a hard metal composition; wherein this method comprises a first preliminary step 701 of machining at least one countersunk through hole in the metallic component, and a second preliminary step 702 of fitting a countersunk bolt in the countersunk hole, before subjecting the metallic component inclusive of the countersunk through-hole and bolt engaged or threaded therein to steps 301 to 307, including multiple overlaying according to the interaction of steps 307 and 308.

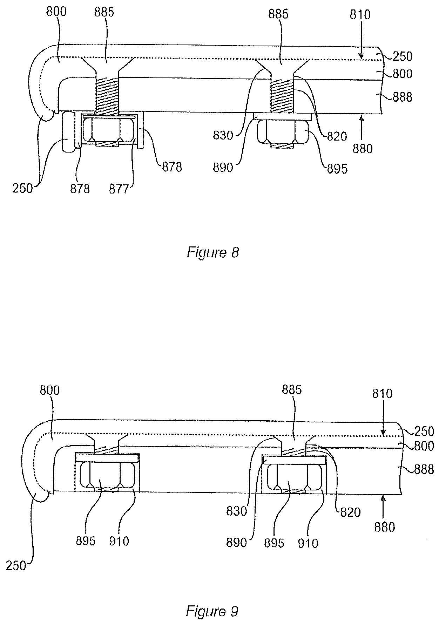

Practical examples of application of the above method are illustrated both in Figure 8, which illustrates two known configurations of modular wear plates incorporating fasteners hard surfaced according to the method described with reference to Figure 7, and in Figure 9, which illustrates two new configurations for the modular wear plates of Figure 8, revised to improve their operational longevity.

A first example is shown in a body portion of a turbine blade 888, having a surface hardened for use through the mounting of a wear plate component 800 there against, in cross section. The blade and the adjacent wear plate each have co-axial through-bores defining a single through-bore 820 extending between the surface portion 810 of the wear plate component 800 to be hard surfaced according to steps 301 to 307, and the surface portion 880 which is the rear wall of the turbine blade. The internal wall of the wear plate through bore 820 is countersunk 830 adjacent the surface portion 810. A countersunk bolt 885 is inserted in the wear plate through-bore 820 with the top surface of the bolt head flush with the surface portion 810 of the wear plate. A washer 890 is fitted about the bolt shaft in abutment to the opposite surface portion 880 of the turbine blade, and a nut 895 is threaded about the bolt shaft in abutment to the washer 890 for securing the bolt in place. In this first example, the nut 895 and washer 890 both project from the opposite surface portion 880 of the turbine blade, and so project proud of the turbine blade rear wall.

A second example, wherein like references correspond to like features in the Figure, is shown at the edge portion of the same turbine blade 888, wherein the corresponding edge portion of the overlying wear plate component 800 surrounds and covers the turbine edge. The blade and the adjacent wear plate each again have co-axial through-bores 820 extending between the surface portion 810 of the wear plate component 800 to be hard surfaced according to steps 301 to 307 and the opposite surface portion 880 of the blade 888, then through the floor of a volume 877 bounded by a peripheral wall 878 projecting away from the opposite surface portion 880 of the turbine blade 888, the peripheral wall defining a counter-bored well atop the opposite surface portion 880 peripherally of the aperture of the blade through-bore 820. The internal wall of the wear plate through bore 820 is still countersunk 830 adjacent the surface portion 810. A countersunk bolt 885 is again inserted in the wear plate through-bore 820, however in this second example the method described with reference to Figure 7 comprises the further steps of chamfering edges of the bolt head 883, welding the bolt head 883 to the wear plate 800 in place, then grinding any resulting welds projecting up from the plane of the top surface to achieve flushness of the welded bolt head with the surface portion 810 of the wear plate. Moreover, in this second example the washer 890 is fitted and the nut 895 is threaded about the bolt shaft within the counter-bored well, so that both are protected from the environment to some extent by the peripheral wall 878 when in use.

In both examples, the wear plate component 800 is hard surfaced with a single layer of hard material composition 250 according to steps 301 to 307 after the bolt 885 is fastened in place, through a flush fit or through chamfering and welding the bolt head 883 and grinding the welds flush, wherein both the wear plate through-apertures 820 and the fastening means are substantially unaffected by the hard surfacing performed at temperatures adjacent the surface portion 210 of the wear plate component 800 that are substantially below the range of material temperature apt to modify or otherwise affect their material properties and geometries.

Figure 9 best illustrates, by reference to the two example configurations shown in Figure 8, the scope for improving the design of parts and components, such as the turbine blade of the example, provided by this effect.

A third example, wherein like references correspond to like features in the Figure, shows the same body portion of the turbine blade 888, having a surface hardened for use through the mounting of the wear plate component 800. The blade and the adjacent wear plate each again have co-axial through-bores. In this example however, whilst the first threaded bore 820 of a first diameter corresponding to the threading diameter of the bolt 885 extends again from the first surface portion 810 of the wear plate to be hard surfaced according to steps 301 to 307 towards the opposite surface portion 880, a second bore 910 is provided, of a second diameter greater than the first diameter, which extends from the opposite surface portion 880 towards the first surface portion 810, wherein both bores are coaxial and so define a counter-bored through-hole having its well within the opposite surface portion 880, of a depth intermediate the first and opposite surface portions 810, 880.

A countersunk bolt 885 is again inserted in the first through-bore 820 with the top surface of the bolt head flush with the surface portion 810 of the wear plate, optionally with chamfering and welding the bolt head 883 and grinding the welds flush. In this example the washer 890 is fitted and the nut 895 is threaded about the bolt shaft within the counter-bored well 910, so that both are protected from the environment by the body of the turbine blade 888 peripherally of the counter-bore 910, relative to the complete absence of any shielding of the first example described with reference to Figure 8.

A similar internally-counter-bored configuration is shown adjacent the edge portion of the turbine blade 888 and wear plate component 800 in the fourth example, to illustrate both how this alternative configuration 910 protects the washer 890 and nut 895 to the same extent as the third example above and thus to a better extent than the projecting well 877, 878 of the second example, and how this alternative configuration 910 simplifies the design and machining of the turbine blade 888 in not requiring an integral projecting counter-bore 877, 878 anymore.

Experimentation has shown that a chromium carbide layer consisting of particles of chromium carbide in a chromium - iron matrix according to the methodology described herein, in proportions of approximately 5% carbon, approximately 43% chromium with the balance made of iron and alloying elements, achieves a hardness of 82 on the HRA scale and should therefore be of benefit to specialist applications involving high abrasion, erosion and impact type wear e.g. on impeller blades, vibratory screens and feeders, crusher rolls and ancillary equipment, also as a high quality wear plate for use in many applications in the mineral processing industries.

Experimentation has shown that a sintered tungsten carbide alloy layer consisting of particles of sintered tungsten carbide in a chromium - tungsten - iron matrix according to the methodology described herein, in proportions of approximately 5% carbon, approximately 53% tungsten carbide, approximately 9% chromium with the balance made of iron and alloying elements, achieves a hardness of 83 on the HRA scale and should therefore be of benefit to specialist applications involving very high abrasion, erosion and medium impact e.g. sinter plant waste gas impellers, coal exhauster impellers, paddle blades and grizzly bars.

## Claims

1. A system 100 for overlaying a metallic component (200) with a hard metal composition (250), comprising:
an arc welding device (110) for generating a weld pool (220) onto a surface portion (210) of the metallic component, having a direction of travel (190) relative to the metallic component in use;
a consumable electrode (120) made of a metallic material or composition, molten by the arc welding device into the weld pool in use;
a first nozzle (130) adjacent the arc welding device, adapted to feed at least a first hard metal material (230) in particulate form into the electric arc upstream of the direction of travel of the arc welding device;
a second nozzle (140) adjacent the arc welding device, adapted to feed at least the first hard metal material or another hard metal material (240) in particulate form into the cooling weld pool downstream of the arc welding device with respect to the direction of travel -of the arc welding device; and
means to displace either the arc welding device, the consumable electrode and the first and second nozzles relative to the metallic component, or to displace the metallic component relative to the arc welding device, the consumable electrode and the first and second nozzles, according to the direction of travel.

2. The system according to claim 1, wherein the means to displace is further configured to oscillate the arc welding device, the consumable electrode and the first and second nozzles orthogonally relative to the direction of travel.

3. The system according to claim 1 or 2, wherein the surface portion of the metallic component comprises at least a first layer of a hard metal composition comprising the one or more first hard metal materials, wherein the arc welding device is further operable for generating a weld pool onto the at least first layer atop the surface portion of the metallic component.

4. The system according to any of claims 1 to 3, wherein the or each hard metal material in particulate form is selected from the group comprising chromium, tungsten, iron, titanium, vanadium, molybdenum, niobium, manganese, nickel, and alloys and compounds thereof.

5. The system according to claim 1, wherein the at least first hard metal material in particulate form fed by the first nozzle is ferrochromium and another hard metal material in particulate form fed by the second nozzle is tungsten carbide ferrochromium, or chromium carbide.

6. The system according to any of claims 1 to 5, wherein the arc welding device is a gas metal arc welding device.

7. The system according to claim 6, further comprising a wire feed unit (150) for dispensing the consumable electrode in use.

8. The system according to any of claims 1 to 7, wherein each nozzle is in communication with at least one hopper (160) storing the at least first hard metal material in particulate form.

9. The system according to claims 1 to 7, wherein each nozzle is in communication with a respective hopper, each hopper storing the same first or a respective hard metal material in particulate form.

10. The system according to claim 8 or 9, wherein the or each hopper is interfaced with the nozzle through a metering device (180).

11. A method of overlaying a metallic component (200) with a hard metal composition (250), comprising the steps of:
Melting a consumable electrode (120) made of a metallic material or composition into a weld pool (220) onto a surface portion (210) of the metallic component with an arc welding device 110 having a direction of travel (190) relative to the metallic component in use;
feeding at least a first hard metal material (230) in particulate form with a first feeding means (160) into the electric arc upstream of the direction of travel of the arc welding device;
feeding at least the first hard metal material or another hard metal material (240) in particulate form with a second feeding means (160) into the cooling weld pool downstream of the arc welding device with respect to the direction of travel of the arc welding device; and
moving the arc welding device and the feeding means relative to the metallic component according to the direction of travel; or
moving the metallic component relative to the arc welding device and the feeding means according to the direction of travel.

12. The method according to claim 11, comprising the further step of oscillating the arc welding device, the consumable electrode and the feeding means orthogonally relative to the direction of travel.

13. The method according to claim 11 or 12, comprising the further steps of melting the consumable electrode and feeding the one or more hard metal material upstream and downstream of the direction of travel of the arc welding device, onto a layer of hard metal composition atop the surface portion of the metallic component.

14. The method according to any of claims 11 to 13, wherein the step of melting comprises heating the consumable electrode within the range 1490 to 1550 degrees Celsius.

15. The method according to any of claims 11 to 14, wherein the step of feeding the or each hard metal material further comprises metering the or each hard metal material according to a rate of displacement of the arc welding device, the feeding means and the component relative to each other.

16. The method according to claim 15, wherein the step of metering the feeding of first hard metal material further comprises generating a feed rate of the first hard metal material.

17. The method according to claim 15 or 16, wherein the step of metering the feeding of the first or each hard metal material at the feeding means further comprises generating a feed rate of the first or another hard metal material.

18. The method according to any of claims 11 to 17, wherein the or each hard metal material in particulate form is selected from the group comprising chromium, tungsten, iron, titanium, molybdenum, vanadium, niobium, manganese, nickel, and alloys and compounds thereof.

19. The method according to claim 11, wherein the at least first hard metal material in particulate form fed by the first nozzle is ferrochromium and another hard metal material in particulate form fed by the second nozzle is tungsten carbide or ferrochromium or chromium carbide.

20. The method according to claim 11 comprising the steps of:
selecting a metallic component comprising integral fastening means;
machining at least one countersunk (830) through hole in the metallic component; and
fitting a countersunk bolt (885) in the countersunk hole.

21. The method according to claim 20, wherein the step of machining comprises machining a plurality of countersunk through holes and wherein the step of fitting comprises fitting fewer bolts than there are machined countersunk hole

22. The method according to claims 20 or 21, wherein the step of machining further comprises counter-boring the or each through-hole in the surface portion of the metallic component opposed to the or each countersunk through-hole.

23. The method according to any of claims 20 to 22, wherein the step of fitting the or each countersunk bolt further comprises the steps of chamfering the bolt head, welding the bolt into the hole and grinding any excess weld metal flush with the surface portion.

24. The method according to any of claims 20 to 23, wherein the or each bolt is made from carbon steel or stainless steel.

## Patentansprüche

1. System (100) zum Überlagern einer metallischen Komponente (200) mit einer Hartmetallzusammensetzung (250), umfassend:
ein Lichtbogenschweißgerät (110) zum Erzeugen eines Schweißbads (220) auf einem Oberflächenabschnitt (210) der metallischen Komponente mit einer Bewegungsrichtung (190) relativ zur verwendeten metallischen Komponente;
eine abschmelzbare Elektrode (120) aus einem metallischen Material oder einer metallischen Zusammensetzung, die durch das Lichtbogenschweißgerät im Gebrauch in das Schweißbad geschmolzen wird;
eine erste Düse (130), angrenzend an das Lichtbogenschweißgerät, die so angepasst ist, dass sie mindestens ein erstes Hartmetallmaterial (230) in Partikelform, stromaufwärts zu der Bewegungsrichtung des Lichtbogenschweißgeräts, in den Lichtbogen einführt;
eine zweite Düse (140), angrenzend an das Lichtbogenschweißgerät, die so angepasst ist, dass sie mindestens das erste Hartmetallmaterial oder ein anderes Hartmetallmaterial (240) in Partikelform in das abkühlende Schweißbad, stromabwärts von dem Lichtbogenschweißgerät bezogen auf die Bewegungsrichtung des Lichtbogenschweißgeräts, einführt; und
Mittel zum Verschieben entweder des Lichtbogenschweißgeräts, der abschmelzbaren Elektrode und der ersten und zweiten Düse relativ zu der metallischen Komponente oder zum Verschieben der metallischen Komponente relativ zu dem Lichtbogenschweißgerät, der abschmelzbaren Elektrode und der ersten und zweiten Düse gemäß der Bewegungsrichtung.

2. System nach Anspruch 1, wobei das Mittel zum Verschieben ferner so konfiguriert ist, dass es das Lichtbogenschweißgerät, die abschmelzbare Elektrode und die erste und die zweite Düse orthogonal relativ zu der Bewegungsrichtung oszilliert.

3. System nach Anspruch 1 oder 2, wobei der Oberflächenabschnitt der metallischen Komponente mindestens eine erste Schicht einer Hartmetallzusammensetzung umfasst, die das eine oder die mehreren ersten Hartmetallmaterialien umfasst, wobei das Lichtbogenschweißgerät ferner zum Erzeugen eines Schweißbads auf der mindestens ersten Schicht auf dem Oberflächenabschnitt der metallischen Komponente betreibbar ist.

4. System nach einem der Ansprüche 1 bis 3, wobei das oder jedes Hartmetallmaterial in Partikelform aus der Gruppe ausgewählt ist, die Chrom, Wolfram, Eisen, Titan, Vanadium, Molybdän, Niob, Mangan, Nickel und Legierungen und Verbindungen davon umfasst.

5. System nach Anspruch 1, wobei das mindestens erste Hartmetallmaterial in Partikelform, das durch die erste Düse zugeführt wird, Ferrochrom ist und ein anderes Hartmetallmaterial in Partikelform, das durch die zweite Düse zugeführt wird, Wolframcarbid-Ferrochrom oder Chromcarbid ist.

6. System nach einem der Ansprüche 1 bis 5, wobei das Lichtbogenschweißgerät ein Gasmetall-Lichtbogenschweißgerät ist.

7. System nach Anspruch 6, ferner umfassend eine Drahtvorschubeinheit (150) zum Abgeben der abschmelzbaren Elektrode im Gebrauch.

8. System nach einem der Ansprüche 1 bis 7, wobei jede Düse mit mindestens einem Trichter (160) in Verbindung steht, der das mindestens erste Hartmetallmaterial in Partikelform speichert.

9. System nach den Ansprüchen 1 bis 7, wobei jede Düse mit einem jeweiligen Trichter in Verbindung steht, wobei jeder Trichter das gleiche erste oder ein entsprechendes Hartmetallmaterial in Partikelform speichert.

10. System nach Anspruch 8 oder 9, wobei der oder jeder Trichter mit der Düse durch eine Dosiervorrichtung (180) verbunden ist.

11. Verfahren zum Überlagern einer metallischen Komponente (200) mit einer Hartmetallzusammensetzung (250), das die folgenden Schritte umfasst:
Schmelzen einer abschmelzbaren Elektrode (120) aus einem metallischen Material oder einer metallischen Zusammensetzung in ein Schweißbad (220) auf einen Oberflächenabschnitt (210) der metallischen Komponente mit einem Lichtbogenschweißgerät (110) mit einer Bewegungsrichtung (190) relativ zur verwendeten metallischen Komponente;
Zuführen von mindestens einem ersten Hartmetallmaterial (230) in Partikelform mit einer ersten Zuführvorrichtung (160) in den Lichtbogen stromaufwärts zu der Bewegungsrichtung des Lichtbogenschweißgeräts;
Zuführen mindestens des ersten Hartmetallmaterials oder eines anderen Hartmetallmaterials (240) in Partikelform mit einer zweiten Zuführvorrichtung (160) in das abkühlende Schweißbad stromabwärts von dem Lichtbogenschweißgerät bezogen auf die Bewegungsrichtung des Lichtbogenschweißgeräts; und
Bewegen des Lichtbogenschweißgeräts und der Zuführvorrichtung relativ zu der metallischen Komponente gemäß der Bewegungsrichtung; oder
Bewegen der metallischen Komponente relativ zu dem Lichtbogenschweißgerät und der Zuführvorrichtung gemäß der Bewegungsrichtung.

12. Verfahren nach Anspruch 11, umfassend den weiteren Schritt des Oszillierens des Lichtbogenschweißgeräts, der abschmelzbaren Elektrode und der Zuführvorrichtung orthogonal zur Bewegungsrichtung.

13. Verfahren nach Anspruch 11 oder 12, umfassend die weiteren Schritte des Schmelzens der abschmelzbaren Elektrode und des Zuführens des einen oder der mehreren Hartmetallmaterialien stromaufwärts und stromabwärts zur Bewegungsrichtung des Lichtbogenschweißgeräts auf eine Schicht der Hartmetallzusammensetzung auf dem Oberflächenabschnitt der metallischen Komponente.

14. Verfahren nach einem der Ansprüche 11 bis 13, wobei der Schritt des Schmelzens das Erwärmen der abschmelzbaren Elektrode innerhalb des Bereichs von 1490 bis 1550 Grad Celsius umfasst.

15. Verfahren nach einem der Ansprüche 11 bis 14, wobei der Schritt des Zuführens des oder jedes Hartmetallmaterials ferner das Dosieren des oder jedes Hartmetallmaterials gemäß einer Verschiebungsrate des Lichtbogenschweißgeräts, der Zuführvorrichtung und der Komponente relativ zueinander umfasst.

16. Verfahren nach Anspruch 15, wobei der Schritt des Dosierens beim Zuführen des ersten Hartmetallmaterials ferner das Erzeugen einer Zuführrate des ersten Hartmetallmaterials umfasst.

17. Verfahren nach Anspruch 15 oder 16, wobei der Schritt des Dosierens der Zufuhr des ersten oder jedes Hartmetallmaterials an der Zuführvorrichtung ferner das Erzeugen einer Zuführrate des ersten oder eines anderen Hartmetallmaterials umfasst.

18. Verfahren nach einem der Ansprüche 11 bis 17, wobei das oder jedes Hartmetallmaterial in Partikelform aus der Gruppe ausgewählt ist, die Chrom, Wolfram, Eisen, Titan, Molybdän, Vanadium, Niob, Mangan, Nickel und Legierungen und Verbindungen davon umfasst.

19. Verfahren nach Anspruch 11, wobei das mindestens erste Hartmetallmaterial in Partikelform, das durch die erste Düse zugeführt wird, Ferrochrom ist und ein anderes Hartmetallmaterial in Partikelform, das durch die zweite Düse zugeführt wird, Wolframcarbid oder Ferrochrom oder Chromcarbid ist.

20. Verfahren nach Anspruch 11, umfassend die folgenden Schritte:
Auswählen einer metallischen Komponente, die integrale Befestigungsmittel umfasst;
Bearbeiten mindestens einer durchgehenden (830) Senkbohrung in der metallischen Komponente; und
Einsetzen einer Senkschraube (885) in die Senkbohrung.

21. Verfahren nach Anspruch 20, wobei der Schritt des Bearbeitens das Bearbeiten einer Vielzahl von durchgehenden Senkbohrungen umfasst und wobei der Schritt des Einsetzens das Einsetzen von weniger Schrauben umfasst, als bearbeitete Senkbohrungen vorhanden sind.

22. Verfahren nach Anspruch 20 oder 21, wobei der Schritt des Bearbeitens ferner das Senkbohren der oder jeder Durchgangsbohrung in dem Oberflächenabschnitt der metallischen Komponente gegenüber der oder jeder durchgehenden Senkbohrung umfasst.

23. Verfahren nach einem der Ansprüche 20 bis 22, wobei der Schritt des Einsetzens der oder jeder Senkschraube ferner die Schritte des Abschrägens des Schraubenkopfs, des Schweißens der Schraube in der Bohrung und des Schleifens eines überschüssigen Schweißmetalls bündig mit dem Oberflächenabschnitt umfasst.

24. Verfahren nach einem der Ansprüche 20 bis 23, wobei der oder jeder Bolzen aus Kohlenstoffstahl oder Edelstahl hergestellt ist.

## Revendications

1. Un système (100) pour superposer un composant métallique (200) avec une composition de métal dur (250), comprenant :
un dispositif de soudage à l'arc (110) pour générer un bain de fusion (220) sur une partie de surface (210) du composant métallique, ayant un sens de déplacement (190) par rapport au composant métallique en cours d'utilisation ;
une électrode consommable (120) faite d'un matériau ou d'une composition métallique, fondue par le dispositif de soudage à l'arc dans le bain de fusion en cours d'utilisation ;
une première buse (130) adjacente au dispositif de soudage à l'arc, conçue pour alimenter au moins un premier matériau de métal dur (230) sous forme de particules dans l'arc électrique en amont du sens de déplacement du dispositif de soudage à l'arc ;
une deuxième buse (140) adjacente au dispositif de soudage à l'arc, conçue pour alimenter au moins le premier matériau de métal dur ou un autre matériau de métal dur (240) sous forme de particules dans le bain de fusion de refroidissement en aval du dispositif de soudage à l'arc par rapport au sens de déplacement du dispositif de soudage à l'arc ; et
des moyens soit pour déplacer le dispositif de soudage à l'arc, l'électrode consommable et les première et deuxième buses par rapport au composant métallique, soit pour déplacer le composant métallique par rapport au dispositif de soudage à l'arc, à l'électrode consommable et aux première et deuxième buses, en fonction du sens de déplacement.

2. Le système selon la revendication 1, dans lequel les moyens de déplacement sont en outre configurés pour faire osciller le dispositif de soudage à l'arc, l'électrode consommable et les première et deuxième buses orthogonalement par rapport au sens de déplacement.

3. Le système selon la revendication 1 ou 2, dans lequel la partie de surface du composant métallique comprend au moins une première couche d'une composition de métal dur comprenant le ou les premiers matériaux de métal dur, dans lequel le dispositif de soudage à l'arc peut en outre être utilisé pour générer un bain de fusion sur l'au moins une première couche en haut de la partie de surface du composant métallique.

4. Le système selon l'une quelconque des revendications 1 à 3, dans lequel le ou chaque matériau de métal dur sous forme de particules est choisi dans le groupe comprenant le chrome, le tungstène, le fer, le titane, le vanadium, le molybdène, le niobium, le manganèse, le nickel et des alliages et composés de ceux-ci.

5. Le système selon la revendication 1, dans lequel l'au moins un premier matériau de métal dur sous forme de particules alimenté par la première buse est du ferrochrome et un autre matériau de métal dur sous forme de particules alimenté par la deuxième buse est du ferrochrome de carbure de tungstène ou du carbure de chrome.

6. Le système selon l'une quelconque des revendications 1 à 5, dans lequel le dispositif de soudage à l'arc est un dispositif de soudage à l'arc gaz-métal.

7. Le système selon la revendication 6, comprenant en outre une unité d'alimentation filaire (150) pour distribuer l'électrode consommable en cours d'utilisation.

8. Le système selon l'une quelconque des revendications 1 à 7, dans lequel chaque buse est en communication avec au moins une trémie (160) stockant l'au moins un premier matériau de métal dur sous forme de particules.

9. Le système selon les revendications 1 à 7, dans lequel chaque buse est en communication avec une trémie respective, chaque trémie stockant le même premier matériau de métal dur ou un matériau de métal dur respectif sous forme de particules.

10. Le système selon la revendication 8 ou 9, dans lequel la ou chaque trémie est interfacée avec la buse par l'intermédiaire d'un dispositif de dosage (180).

11. Un procédé de superposition d'un composant métallique (200) avec une composition de métal dur (250), comprenant les étapes de :
faire fondre une électrode consommable (120) faite d'un matériau ou d'une composition métallique dans un bain de fusion (220) sur une partie de surface (210) du composant métallique avec un dispositif de soudage à l'arc (110) ayant un sens de déplacement (190) par rapport au composant métallique en cours d'utilisation ;
alimenter au moins un premier matériau de métal dur (230) sous forme de particules avec un premier moyen d'alimentation (160) dans l'arc électrique en amont du sens de déplacement du dispositif de soudage à l'arc ;
alimenter au moins le premier matériau de métal dur ou un autre matériau de métal dur (240) sous forme de particules avec un deuxième moyen d'alimentation (160) dans le bain de fusion de refroidissement en aval du dispositif de soudage à l'arc par rapport au sens de déplacement du dispositif de soudage à l'arc ; et
déplacer le dispositif de soudage à l'arc et les moyens d'alimentation par rapport au composant métallique en fonction du sens de déplacement ; ou
déplacer le composant métallique par rapport au dispositif de soudage à l'arc et aux moyens d'alimentation en fonction du sens de déplacement.

12. Le procédé selon la revendication 11, comprenant l'étape supplémentaire de faire osciller le dispositif de soudage à l'arc, l'électrode consommable et les moyens d'alimentation orthogonalement par rapport au sens de déplacement.

13. Le procédé selon la revendication 11 ou 12, comprenant les étapes supplémentaires de faire fondre l'électrode consommable et alimenter le ou les matériaux de métal dur en amont et en aval du sens de déplacement du dispositif de soudage à l'arc, sur une couche de composition de métal dur en haut de la partie de surface du composant métallique.

14. Le procédé selon l'une quelconque des revendications 11 à 13, dans lequel l'étape de faire fondre comprend le chauffage de l'électrode consommable dans la plage de 1490 à 1550 degrés Celsius.

15. Le procédé selon l'une quelconque des revendications 11 à 14, dans lequel l'étape d'alimenter le ou chaque matériau de métal dur comprend en outre le dosage du ou de chaque matériau de métal dur selon une vitesse de déplacement du dispositif de soudage à l'arc, des moyens d'alimentation et du composant l'un par rapport à l'autre.

16. Le procédé selon la revendication 15, dans lequel l'étape de dosage de l'alimentation du premier matériau de métal dur comprend en outre la génération d'une vitesse d'alimentation du premier matériau de métal dur.

17. Le procédé selon la revendication 15 ou 16, dans lequel l'étape de dosage de l'alimentation du premier ou de chaque matériau de métal dur au niveau des moyens d'alimentation comprend en outre la génération d'une vitesse d'alimentation du premier ou d'un autre matériau de métal dur.

18. Le procédé selon l'une quelconque des revendications 11 à 17, dans lequel le ou chaque matériau de métal dur sous forme de particules est choisi dans le groupe comprenant le chrome, le tungstène, le fer, le titane, le molybdène, le vanadium, le niobium, le manganèse, le nickel et des alliages et composés de ceux-ci.

19. Le procédé selon la revendication 11 dans lequel l'au moins un premier matériau de métal dur sous forme de particules alimenté par la première buse est du ferrochrome et un autre matériau de métal dur sous forme de particules alimenté par la deuxième buse est du carbure de tungstène, du ferrochrome ou du carbure de chrome.

20. Le procédé selon la revendication 11, comprenant les étapes de :
sélectionner un composant métallique comprenant des moyens de fixation intégrés ;
usiner au moins un trou traversant fraisé (830) dans le composant métallique ; et
installer un boulon fraisé (885) dans le trou fraisé.

21. Le procédé selon la revendication 20, dans lequel l'étape d'usinage comprend l'usinage d'une pluralité de trous traversants fraisés et dans lequel l'étape d'installation comprend l'installation de moins de boulons qu'il n'y a de trous fraisés usinés.

22. Le procédé selon la revendication 20 ou 21, dans lequel l'étape d'usinage comprend en outre le contre-alésage du ou de chaque trou traversant dans la partie de surface du composant métallique opposée au ou à chaque trou traversant fraisé.

23. Le procédé selon l'une quelconque des revendications 20 à 22, dans lequel l'étape d'installation du ou de chaque boulon fraisé comprend en outre les étapes de chanfreinage de la tête de boulon, de soudage du boulon dans le trou et de meulage de tout excès de métal de soudure affleurant la partie de surface.

24. Le procédé selon l'une quelconque des revendications 20 à 23, dans lequel le ou chaque boulon est fabriqué en acier au carbone ou en acier inoxydable.
